# EUROPEAN PATENT APPLICATION

(11) **EP 2 717 149 A2**
(43) Date of publication of application: **09.04.2014**
(21) Application number: 13181866.8
(22) Date of filing: 27.08.2013
(51) Int. Cl.: G06F 3/0488

(54) **Display control method for displaying different pointers according to attributes of a hovering input position**

(30) Priority: 27.08.2012 KR 20120093821
(71) Applicant: Samsung Electronics Co., Ltd, Gyeonggi-do 443-742 (KR)
(72) Inventor: Kim, Taeyeon, 443-742 Gyeonggi-do (KR); Koh, Sanghyuk, 443-742 Gyeonggi-do (KR); Myung, Jihye, 443-742 Gyeonggi-do (KR); Lee, Chihoon, 443-742 Gyeonggi-do (KR); Lee, Hyemi, 443-742 Gyeonggi-do (KR); Kim, Yuran, 443-742 Gyeonggi-do (KR); Park, Hyunmi, 443-742 Gyeonggi-do (KR)
(74) Representative: Birchenough, Lewis

(57) **Abstract**

A mobile terminal and a display control method for the same are provided. The display control method enables the mobile terminal to detect hovering input of a pen and to display a different pointer according to the attribute of the hovering input position. The display control method includes detecting a hovering input, identifying a position of the hovering input, determining an attribute associated with the hovering input position; and displaying a pointer corresponding to the determined attribute at the position of the hovering input.

## Description

### TECHNICAL FIELD

The present invention relates generally to a mobile terminal and a display control method for the same. More particularly, although not exclusively, the present invention relates to a mobile terminal and a display control method for the same for detecting a hovering input of an input object (e.g. pen) and for displaying different pointers according to attributes of the hovering input position.

### BACKGROUND OF THE INVENTION

Recent electronic devices, for example smartphones, employ various input recognition techniques to provide a variety of functions based on recognized input.

In particular, a mobile terminal, for example a smartphone may perform, in response to one input, one of multiple operations, for example entering a text input mode, entering a drawing input mode and providing a popup menu.

However, a user of a mobile terminal of the related art may identify a mode provided by an input only after actually selecting a specific position to perform mode transition. For example, the user cannot identify possible operations associated with a specific position in advance before the user actually selects the position to perform mode transition.

The above information is presented as background information only to assist with an understanding of the present invention. No determination has been made, and no assertion is made, as to whether any of the above might be applicable as prior art with regard to the present invention.

### SUMMARY OF THE INVENTION

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a mobile terminal and display control method for the same that detect hovering input of a pen and display a pointer differently according to attributes of the hovering input position.

In accordance with an aspect of the present invention, there is provided a display control method (e.g. for a mobile terminal), the method comprising the steps of: detecting a hovering input; identifying a position of the hovering input; determining an attribute associated with the hovering input position; and displaying a pointer corresponding to the determined attribute at the position of the hovering input.

In certain exemplary embodiments, the hovering input may be generated by an input object (e.g. pen device).

In certain exemplary embodiments, the determining of an attribute may include checking whether the hovering input position is associated with an information display, and loading, when the hovering input position is associated with the information display, a pointer indicating presence of information to be displayed.

In certain exemplary embodiments, the determining of an attribute may include checking whether the hovering input position is associated with a text input or a drawing input, and loading, when the hovering input position is associated with the text input or the drawing input, a text pointer or drawing pointer according to the input attribute.

In certain exemplary embodiments, the loading of a drawing pointer may include determining, when the hovering input position is associated with the drawing input, whether the input mode is a pen mode or an eraser mode, and loading a pen pointer or eraser pointer corresponding to the pen mode or the eraser mode. In certain exemplary embodiments, the loading of a drawing pointer may include determining, when the input mode is the pen mode, properties of a drawing pen (e.g. including one or more of a shape, a thickness and a color), and loading a pen pointer corresponding to the pen mode.

In certain exemplary embodiments, the determining of an attribute may include determining whether the hovering input position is associated with actions (e.g. including one or more of scrolling, panning, object movement, split screen adjustment and object size change), and loading, when the hovering input position is associated with one of the actions, a pointer corresponding to the associated action.

In certain exemplary embodiments, the displaying of the pointer may include displaying the pointer at the hovering input position in conjunction with an application effect (e.g. including one or more of a translucence effect, a popup window effect, an animation effect, and a slide effect).

In certain exemplary embodiments, the display control method may further include detecting a mode change input, loading setting information regarding the mode change input from mode changes, and displaying a pointer corresponding to a changed mode on the basis of the setting information.

In certain exemplary embodiments, the mode change input may be generated by an input element (e.g. button) on an input source having generated the hovering input.

In certain exemplary embodiments, in the case of a drawing input attribute, the mode changes may include one or more of a change in pen properties (e.g. including one or more of a type, a thickness, and a color of a drawing pen), and a transition between a pen mode and another mode (e.g. an eraser mode).

In accordance with another aspect of the present invention, there is provided a mobile terminal comprising: an input unit for detecting a hovering input and generating an input signal corresponding to the hovering input; a display unit for displaying information; and a control unit for identifying, upon reception of the input signal from the input unit, a position of hovering input, determining an attribute associated with the hovering input position, and controlling the display unit to display a pointer corresponding to the determined attribute.

In certain exemplary embodiments, the input unit may be configured to generate an input signal on the basis of one or more of an input source for hovering input and states of an input element (e.g. button) on the input source, and wherein the control unit is configured to identify the position of hovering input when the input source is an input object (e.g. pen device).

In certain exemplary embodiments, the attribute may be related to one or more of an information display, a text input, a drawing input, a scrolling operation, a panning operation, an object movement operation, a split screen adjustment operation, and an object size change operation.

In certain exemplary embodiments, the control unit may be configured to check whether the hovering input position is associated with an information display and control, when the hovering input position is associated with the information display, the display unit to display a pointer indicating the information to be displayed.

In certain exemplary embodiments, the control unit may be configured to check whether the hovering input position is associated with a text input or a drawing input and control, when the hovering input position is associated with text input or drawing input, the display unit to display a text pointer or a drawing pointer according to the input attribute.

In certain exemplary embodiments, the control unit may be configured to determine, when the hovering input position is associated with the drawing input, whether the input mode is a pen mode or an eraser mode, and control the display unit to display a pen pointer or an eraser pointer according to the pen mode or eraser mode. In certain exemplary embodiments, the control unit may be configured to determine, when the input mode is a pen mode, properties of a drawing pen (e.g. including one or more of a shape, a thickness and a color), and control the display unit to display a pen pointer according to the pen mode.

In certain exemplary embodiments, the control unit may be configured to determine whether the hovering input position is associated with actions (e.g. including one or more of scrolling, panning, object movement, split screen adjustment and object size change), and control, when the hovering input position is associated with one of the actions, the display unit to display a pointer corresponding to the associated action.

In certain exemplary embodiments, upon detection a mode change input, the input unit may be configured to generate an input signal corresponding to the mode change input, and wherein the control unit may be configured to load setting information regarding mode changes in response to the mode change input and control the display unit to display a pointer corresponding to a changed mode based on the setting information.

In certain exemplary embodiments, the mode change input may be generated by an input element (e.g. button) on an input source having generated the hovering input.

In certain exemplary embodiments, in the case of a drawing input attribute, the mode change may comprise one or more of a change in pen properties (e.g. including one or more of a type, a thickness and a color of a drawing pen), and a transition between a pen mode and an eraser mode.

Another aspect of the present invention provides a computer program comprising instructions arranged, when executed, to implement a method, system and/or apparatus, in accordance with any one of the above-described aspects. A further aspect of the present invention provides a machine-readable storage storing such a program.

Other aspects, advantages, and salient features of the present invention will become apparent to those skilled in the art from the following detailed description, which, taken in conjunction with the annexed drawings, discloses various exemplary embodiments of the present invention.

### BRIEF DESCRIPTION OF THE DRAWINGS

The above and other aspects, and features and advantages of certain exemplary embodiments of the present invention will be more apparent from the following detailed description in conjunction with the accompanying drawings, in which:

FIG. 1 is a block diagram of a mobile terminal according to an exemplary embodiment of the present invention;

FIG. 2 illustrates an example of an input unit, for example the input unit of the mobile terminal of FIG. 1, according to an exemplary embodiment of the present invention;

FIG. 3 is a flowchart of a display control method for the mobile terminal according to an exemplary embodiment of the present invention;

FIG. 4 illustrates a hovering input according to an exemplary embodiment of the present invention;

FIG. 5 is a flowchart of an attribute determination procedure according to a first exemplary embodiment of the present invention;

FIGS. 6A and 6B illustrate display states according to the first exemplary embodiment of the present invention;

FIG. 7 is a flowchart of an attribute determination procedure according to a second exemplary embodiment of the present invention;

FIGS. 8A to 8C illustrate example display states according to the second exemplary embodiment of the present invention;

FIG. 9 is a flowchart of an attribute determination procedure according to a third exemplary embodiment of the present invention;

FIGS. 10A and 10B, 11, 12,and 13 illustrate example display states according to the third exemplary embodiment of the present invention; and

FIG. 14 illustrates example display states according to mode changes according to an exemplary embodiment of the present invention.

Throughout the drawings, it should be noted that the same or similar reference numbers may be used to depict the same or similar elements, features, and/or structures.

### DETAILED DESCRIPTION

The following description with reference to the accompanying drawings is provided to assist in a comprehensive understanding of various embodiments of the present invention, as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention.

In addition, descriptions of well-known functions, processes, elements, features, structures and constructions may be omitted for clarity and conciseness, and to avoid obscuring the subject matter of the present invention.

The terms and words used in the following description and claims are not limited to the bibliographical meanings, but, are merely used to enable a clear and consistent understanding of embodiments of the present invention. Accordingly, it should be apparent to those skilled in the art that the following description of various embodiments of the present invention is provided for illustration purpose only and not for the purpose of limiting the present invention, as defined by the appended claims.

It is to be understood that singular forms, for example "a," "an," and "the", include plural referents unless the context clearly dictates otherwise. Thus, for example, reference to "a component surface" includes reference to one or more of such surfaces.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

Certain embodiments of the present invention are applicable to display control of a mobile terminal capable of sensing hovering input.

Certain embodiments of the present invention may be applied to any suitable type of electronic appliance capable of sensing hovering input by an input object (e.g. a pen, stylus or finger), for example a smartphone, a portable terminal, a mobile terminal, a Personal Digital Assistant (PDA), a Portable Multimedia Player (PMP), a note pad, a WiBro terminal, or a tablet computer.

In certain embodiments, a hovering input may comprise, for example, an input that is generated by sensing the presence of an input object (e.g. a finger, pen or stylus) spaced away from, but not in direct contact with, the surface of an input unit (e.g. a screen of the input unit). In certain embodiments, a hovering input may be generated, for example, only when the input object is spaced less than a certain distance away from the input unit. In certain embodiments, the position of the hovering input may comprise, for example, a position on the surface of the input unit that a part (e.g. tip) of the input object is spaced away from. In certain embodiments, the position may be specified, for example, by at least two co-ordinates (e.g. two-dimensional co-ordinates defined with respect to the surface of the input unit). In certain embodiments, the spacing between the input object and the input unit may also be determined, and may be used to define an additional co-ordinate.

In certain embodiments, an attribute associated with a hovering position may comprise, for example, an available, action, function, operation, input and/or output associated with the hovering position. In certain embodiments, a pointer may comprise, for example, any suitable graphical item (e.g. comprising one or more of an icon, symbol, image, cursor, text, and the like) corresponding to (e.g. for representing or indicating) an attribute.

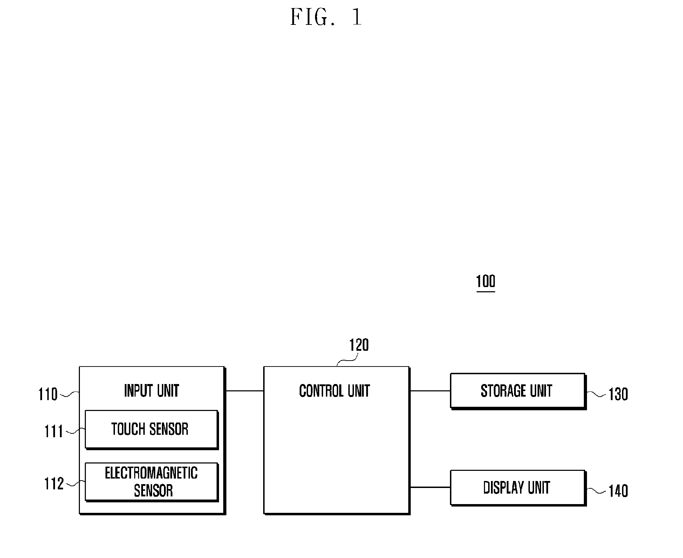

FIG. 1 is a block diagram of a mobile terminal 100 according to an exemplary embodiment of the present invention.

Referring to FIG. 1, the mobile terminal 100 may include an input unit 110, a control unit 120, a storage unit 130, and a display unit 140.

The input unit 110 senses user input and sends an input signal corresponding to the user input to the control unit 120. The input unit 110 may be configured to include a touch sensor 111 and an electromagnetic sensor 112.

The touch sensor 111 may sense a user touch gesture. The touch sensor 111 may take the form of a touch film, touch sheet, a touch pad or the like. The touch sensor 111 may sense touch input and send a corresponding touch signal to the control unit 120. Here, information corresponding to the sensed touch input may be displayed on the display unit 140. The touch sensor 111 may sense user touch input through various input sources. The touch sensor 111 may sense touch input through a finger or physical tool. The touch sensor 111 may sense not only direct contact, but also proximity input within a certain distance (e.g. preset distance) with respect to the display unit 140.

The electromagnetic sensor 112 may sense touch input or proximity input according to change in an electromagnetic field strength. The electromagnetic sensor 112 may include a coil to induce a magnetic field and may sense an object that has a resonant circuit, thereby causing a change in the characteristics of the magnetic field created by the electromagnetic sensor 112. Such an object having a resonant circuit may be an input device, for example a stylus pen or digitizer pen. The electromagnetic sensor 112 may sense direct contact with the mobile terminal 100 and a proximity input or a hovering input without direct contact of the input device. Supplemental input sources, for example a key, button and dial may cause different changes in the characteristics of the magnetic field created by the electromagnetic sensor 112. Hence, the electromagnetic sensor 112 may sense manipulation of the supplemental input sources.

The input unit 110 may include an input pad upon which the touch sensor 111 and the electromagnetic sensor 112 are mounted. The input unit 110 may be composed of an input pad to which the touch sensor 111 is attached in the form of a film or with which the touch sensor 111 is coupled in the form of a panel. The input unit 110 may be composed of an input pad using the electromagnetic sensor 112 on the basis of ElectroMagnetic Resonance (EMR) or ElectroMagnetic Interference (EMI). The input unit 110 may be formed with multi-layered input pads using multiple sensors for input detection.

The input unit 110 and the display unit 140 may be combined into a layered structure to form a touchscreen. For example, the input unit 110 including an input pad having the touch sensor 111 may be combined with the display unit 140 coupled with a TouchScreen Panel (TSP). Alternatively, the input unit 110 including an input pad having the electromagnetic sensor 112 may be combined with the display unit 140 having a display panel.

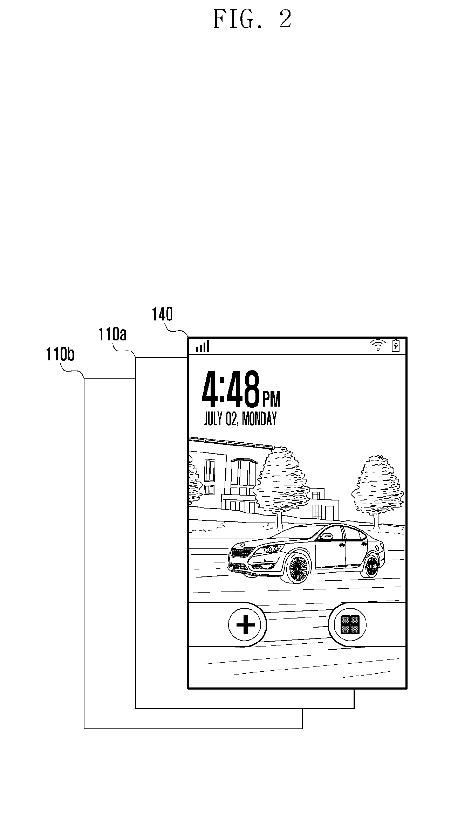

FIG. 2 illustrates an example of an input unit, for example the input unit of the mobile terminal of FIG. 1, according to an exemplary embodiment of the present.

Referring to FIG. 2, the input unit 110 may be composed of a first input pad 110a and a second input pad 110b forming a layered structure. The first input pad 110a and the second input pad 110b may be a touch or pressure pad including the touch sensor 111 or may be an electromagnetic or EMR pad including the electromagnetic sensor 112. The first input pad 110a and the second input pad 110b correspond to different inputs and may receive input respectively from the different input sources. For example, the first input pad 110a may be a touch pad capable of sensing touch input from a human body (e.g. finger) and the second input pad 110b may be an EMR pad capable of sensing a pen input. The input unit 110 may sense a multi-point input from the first input pad 110a and second input pad 110b. Here, an input pad sensing pen input may include sense states of a key, button or jog dial formed on the pen.

The input unit 110 may be combined with the display unit 140 to form a layered structure. The first input pad 110a and second input pad 110b may be placed below the display unit 140 so as to detect input generated by an icon, menu item, button or the like displayed on the display unit 140. The display unit 140 may commonly be a display panel or be a touchscreen panel combined with an input pad.

The combination between the input unit 110 and the display unit 140 depicted in FIG. 2 is purely illustrative. The types and number of input pads constituting the input unit 110, and relative arrangement of input pads and the display unit 140 may be varied according to manufacturing technology.

In particular, the input unit 110 may sense a hovering input, generate an input signal corresponding to the hovering input, and send the input signal to the control unit 120. The input unit 110 may generate an input signal together with hovering information regarding hovering input position, input source and states of a button on the input source.

The control unit 120 may control the individual components of the mobile terminal 100 to realize functions of embodiments of the present invention. For example, when a hovering input of a pen is sensed through the input unit 110, the control unit 120 may control the display unit 140 to display a pointer corresponding to the attribute of the hovering input position.

In one embodiment, when an input signal from the input unit 110 contains hovering input information, the control unit 120 may identify the hovering input position, identify an attribute corresponding to the hovering input position, and control the display unit 140 to display a pointer corresponding to the identified attribute.

The control unit 120 may determine whether the hovering input position corresponds to an attribute of information display according to hovering input, an attribute of text input or drawing input, or an attribute of actions including scrolling, panning, object movement, split screen adjustment and object size change. When the hovering input position corresponds to the drawing input attribute, the control unit 120 may determine an input mode, for example a pen mode and an eraser mode. When the pen mode is determined as the input mode, the control unit 120 may determine pen properties including a type, a thickness and a color of a drawing pen.

Operations of the control unit 120 are described in more detail later with reference to the drawings.

The storage unit 130 may store programs or commands for the mobile terminal 100. The control unit 120 may execute the programs or the commands stored in the storage unit 130.

The storage unit 130 may include one or more of various types of storage media, for example a flash memory, hard disk, multimedia or other memory card, Random Access Memory (RAM), Static Random Access Memory (SRAM), Read Only Memory (ROM), Programmable Read-Only Memory (PROM), Electrically Erasable Programmable Read-Only Memory (EEPROM), magnetic memory, magnetic disk, and optical disc.

In certain embodiments, the storage unit 130 stores information regarding user input and actions corresponding to input position. For example, the storage unit 130 may store information regarding a touch input, a proximity input and a pressure input, as well as actions corresponding to the input position. For example, the storage unit 130 may further store information regarding actions corresponding to states of a button formed on an input source for generating input. The control unit 120 may identify an action corresponding to a hovering input position and determine an attribute as to the identified action on the basis of information related to actions stored in the storage unit 130.

The storage unit 130 may temporarily or semi-permanently store information on pen properties including a type, a thickness and a color of a drawing pen for drawing input according to user settings or initial settings.

The display unit 140 outputs information processed by the mobile terminal 100. For example, the display unit 140 may display guide information for the currently active application, program or service as part of the User Interface (UI) or Graphical User Interface (GUI).

The display unit 140 may be realized using one or more of display techniques based on Liquid Crystal Display (LCD), Thin Film Transistor Liquid Crystal Display (TFT-LCD), Organic Light Emitting Diodes (OLED), flexible display, and 3D display.

When the display unit 140 is layered with the touch sensor 111 and/or the electromagnetic sensor 112 of the input unit 110, it may serve as a touchscreen for touch input. In this case, the display unit 140 may serve as an input source as well as a display source.

In certain embodiments, the display unit 140 displays a pointer corresponding to the attribute of a hovering input position under control of the control unit 120. The display unit 140 may display different pointers if the attribute of a hovering input position indicates information display of a pointer. The display unit 140 may display different pointers according to whether the attribute of a hovering input position indicates a text input or a drawing input. The display unit 140 may display different pointers if the attribute of the hovering input position corresponds to actions for example scrolling, panning, object movement, split screen adjustment and object size change.

The components of the mobile terminal 100 shown in FIG. 1 are examples and, therefore, components may be added or an existing component may be omitted or replaced according to the requirements of the mobile terminal.

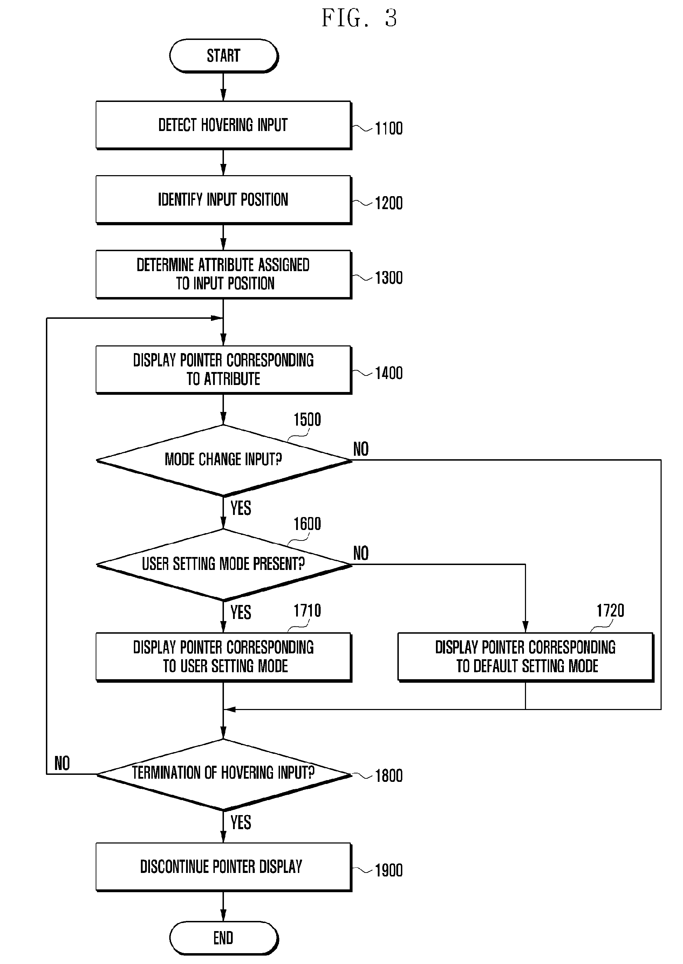

FIG. 3 is a flowchart of a display control method according to an exemplary embodiment of the present invention.

Referring to FIG. 3, the control unit 120 of the mobile terminal 100 detects hovering input at operation 1100.

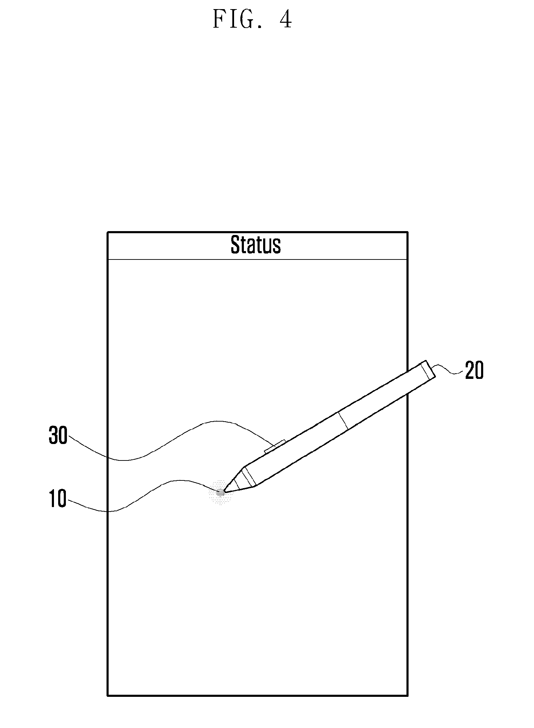

FIG. 4 illustrates a hovering input according to an exemplary embodiment of the present invention.

The hovering input may be generated when an input source is placed in proximity to the mobile terminal 100 as shown in FIG. 4.

The input unit 110 may sense the hovering input through one of the touch sensor 111 and the electromagnetic sensor 112. Here, the touch sensor 111 I may be used to sense a hovering input by a finger (human body) and the electromagnetic sensor 112 may be used to sense a hovering input by a pen device, for example a stylus pen or digitizer pen. When any of the hovering input is sensed, the input unit 110 generates a corresponding input signal and sends the input signal to the control unit 120.

The input signal may carry hovering information including hovering input position, input source, and states of a button on the input source. That is, the input unit 110 generates an input signal specific to an input device for the hovering input. For a hovering input by a pen, the input unit 110 generates an input signal reflecting states of key input, buttons and jog dials on the pen.

The control unit 120 recognizes the hovering input from the input unit 110 and may identify hovering information for example hovering input position and an input source providing the input signal. For example, referring to FIG. 4, the control unit 120 may identify a hovering input position 10, a pen 20 as an input source, and pressing of a button 30 as the basis of the input signal.

In certain embodiments, upon detection of the hovering input by a pen device, for example a stylus pen or digitizer pen, the control unit 120 may perform display control according to the hovering input. The control unit 120 may also perform display control according to a state of a button on the pen device.

Upon detection of the hovering input by an input source other than the pen device, the control unit 120 may perform a corresponding operation. For example, the control unit 120 may perform an operation, for example a function execution, call placement or reception, message transmission, character input, page transition, or multimedia playback.

In the above description, the control unit 120 performs display control upon detection of the hovering input by a pen device optionally having a button pressed. However, the control unit 120 may also perform a guiding operation upon detection of hovering input by a different input source, for example a finger.

The control unit 120 identifies the hovering input position at operation 1200.

The control unit 120 identifies the hovering input position on the basis of the input signal received from the input unit 110. The hovering input position may be represented as two-dimensional coordinates defined on the display unit 140.

The control unit 120 identifies an attribute assigned to the hovering input position at operation 1300.

The control unit 120 may determine the attribute based on operations associated with the hovering input position. For example, the control unit 120 may determine whether the hovering input position is associated with information display, text input or drawing input. The control unit 120 may determine whether the hovering input position is associated with an operation, for example scrolling, panning, object movement, split screen adjustment and object size change. Attribute handling is described in more detail later.

To identify the attribute corresponding to the hovering input position, the control unit 120 may refer to information related to the currently active application or service. For an application at which hovering input occurs, the control unit 120 may refer to application information including operation or attribute information describing mappings between operations and positions on the display unit 140. The application information may be prepared by the application developer and stored together with the corresponding application in the mobile terminal 100.

The control unit 120 is configured to display a pointer corresponding to the identified attribute at operation 1400.

The control unit 120 controls the display unit 140 to display a pointer corresponding to the attribute. The pointer may contain at least one of text and image. The control unit 120 may display the pointer at the hovering input position and may control the display unit 140 to display the pointer together with at least one effect for example a translucence effect, a popup window effect, an animation effect, and a slide effect.

Next, a description is given of attribute determination according to specific examples of hovering input positions and corresponding pointer displays.

### First Exemplary Embodiment

In a first exemplary embodiment of the present invention, the control unit 120 may display different pointers depending upon the presence of the information display attribute.

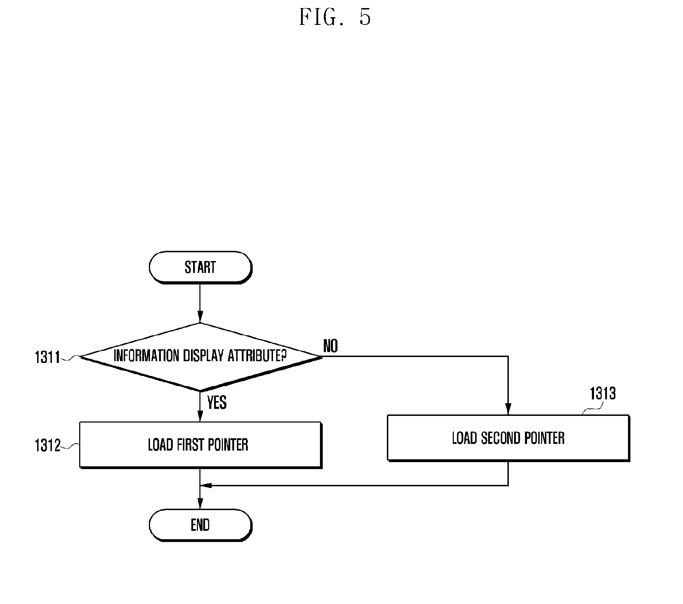

FIG. 5 is a flowchart of an attribute determination procedure according to the first exemplary embodiment of the present invention.

For example, referring to FIG. 5, as a part of operation 1300 for the attribute determination, the control unit 120 determines whether the hovering input position is associated with the information display attribute at operation 1311.

To this end, the control unit 120 may check the presence of an information display attribute to be displayed corresponding to the hovering input. The information to be displayed may be, for example, one of guide information, menu information, and notification or warning information. When information to be displayed is present, the control unit 120 may determine that the hovering input position is associated with the information display attribute. When information to be displayed is not present, the control unit 120 may determine that the hovering input position is not associated with the information display attribute.

When the hovering input position is associated with the information display attribute, the control unit 120 loads a first pointer at operation 1312. Here, the first pointer indicates presence of information to be displayed at the hovering input position. The control unit 120 may assign a specific shape, color or image to the first pointer to indicate the presence of information to be displayed. The shape, color and image assignable to the first pointer may be determined according to user or manufacturer settings.

When the hovering input position is not associated with the information display attribute, the control unit 120 loads a second pointer at operation 1313. Here, the second pointer indicates the absence of information to be displayed at the hovering input position and may be a regular pointer indicating a wait state. The second pointer has a different shape, color and image than the first pointer. The shape, color and image assignable to the second pointer may be determined according to user or manufacturer settings.

After the attribute determination, the control unit 120 controls the display unit 140 to display a pointer corresponding to the attribute. The control unit 120 controls the display unit 140 to display the pointer loaded according to presence of the information display attribute.

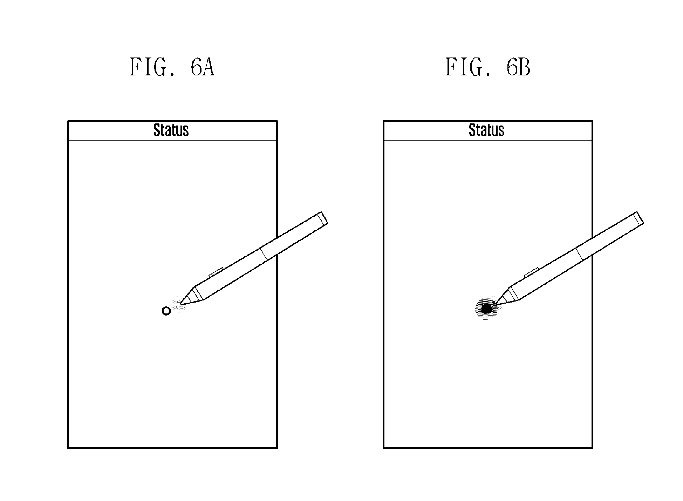

FIGS. 6A and 6B illustrate display states according to the first exemplary embodiment of the present invention.

When the hovering input position is associated with the information display attribute, the control unit 120 displays the first pointer. For example, referring to FIG. 6A, the first pointer may have a shape of a hollow circle. When the hovering input position is not associated with the information display attribute, the control unit 120 displays the second pointer. For example, referring to FIG. 6B, the second pointer may have a shape of a filled circle. Thus, the second pointer includes one or more of a shape, color and image that is different from the first pointer.

Hence, the user may identify presence of information to be displayed at the hovering input position based on the displayed pointer. That is, the user may determine information displayed at a specific position without actual input by bringing an input source in proximity with the mobile terminal 100 (i.e., the hovering input).

### Second Exemplary Embodiment

In a second exemplary embodiment of the present invention, the control unit 120 may display different pointers depending upon presence of the information display attribute.

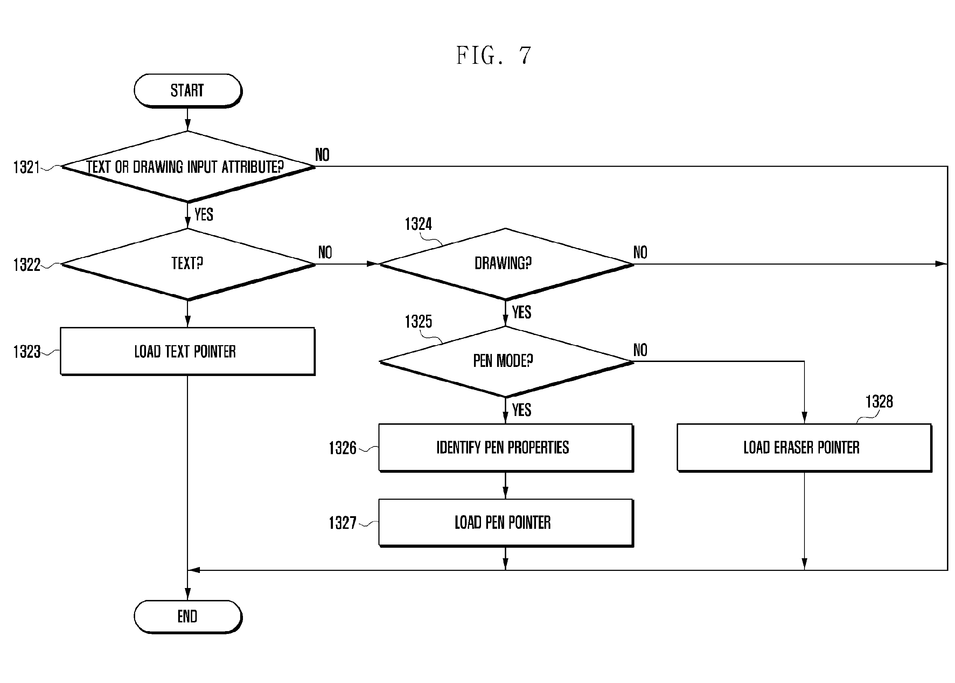

FIG. 7 is a flowchart of an attribute determination procedure according to the second exemplary embodiment of the present invention.

More specifically, referring to FIG. 7, as a part of operation 1300 for attribute determination, the control unit 120 determines whether the hovering input position is associated with one or more of text or drawing input attribute at operation 1321.

The control unit 120 may determine whether the hovering input position is associated with the text or drawing input attribute according to the possibility of a text input or a drawing input at the hovering input position.

Text input is possible when the hovering input position corresponds to an input region of an application, program or service requiring character input, for example a text message, email message, memo or phone number, for example.

Drawing input is possible when the hovering input position corresponds to an input region of an application, program or service requiring graphical input, for example a drawing, memo, picture diary or screen capture, for example.

When the hovering input position is associated with the text input attribute or the drawing input attribute, the control unit 120 determines whether the hovering input position is associated with the text input attribute at operation 1322.

That is, at operation 1322, the control unit 120 may determine that the hovering input position is associated with the text input attribute when the text input is possible at the hovering input position.

When the hovering input position is associated with the text input attribute, the control unit 120 loads a text pointer at operation 1323.

In this example, the text pointer indicates the option to provide text input at the hovering input position. The control unit 120 may assign a specific shape, color or image to the text pointer to indicate the option to provide text input. The shape, color and image assignable to the text pointer may be determined according to user or manufacturer settings.

When the hovering input position is not associated with the text input attribute, the control unit 120 determines whether the hovering input position is associated with the drawing input attribute at operation 1324.

That is, at operation 1324, the control unit 120 may determine that the hovering input position is associated with the drawing input attribute the drawing input is possible at the hovering input position.

When the hovering input position is associated with the drawing input attribute, the control unit 120 determines whether the input mode is a pen mode at operation 1325.

In the case of the pen mode input attribute, the control unit 120 may perform drawing input according to user manipulation in the pen mode and may perform drawing removal according to user manipulation in the eraser mode. The control unit 120 may identify the input mode on the basis of settings at the time of drawing input termination, user settings, or initial settings. Input mode settings may be temporarily or semi-permanently stored in the storage unit 130.

When the input mode is a pen mode, the control unit 120 identifies the pen properties at operation 1326.

The control unit 120 may determine properties of a drawing pen, for example shape, thickness and color, for example. Pen properties may be identified based on one or more of settings at the time of drawing input termination, user settings, and initial settings. Pen settings may be temporarily or semi-permanently stored in the storage unit 130.

The control unit 120 loads a pen pointer corresponding to the pen properties at operation 1327.

The control unit 120 may load a pen pointer corresponding to the pen properties including one or more of shape, color, thickness and texture, for example. The pen properties, for example including shape, color, thickness and texture of a pen pointer, may be determined according to information regarding an application, program or service providing a drawing mode or associated pointer data.

Referring back to operation 1325, when the input mode is not a pen mode, the control unit 120 loads an eraser pointer corresponding to an eraser mode at operation 1328.

The eraser pointer may have a one or more of a shape, color and image reminiscent of an actual eraser. The shape, color and image of the eraser pointer may be determined according to information regarding an application, program or service providing a drawing mode or associated pointer data.

In certain embodiments of the present invention, the text pointer, pen pointer and eraser pointer described may above differ in one or more characteristics, for example shape, thickness and image.

After attribute determination, the control unit 120 controls the display unit 140 to display a pointer corresponding to the attribute. The control unit 120 controls the display unit 140 to display the pointer loaded according to the text or drawing input attribute.

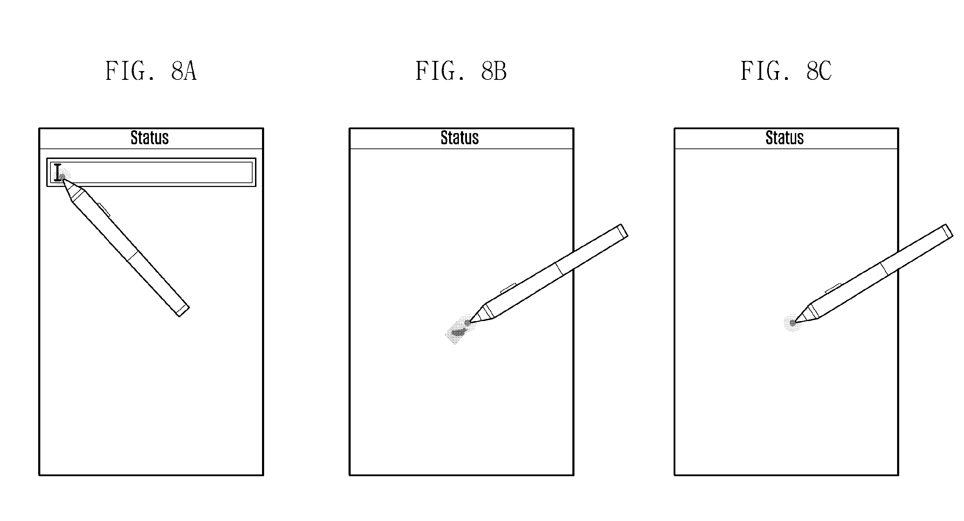

FIGS. 8A to 8C illustrate example display states according to the second exemplary embodiment of the present invention.

When the hovering input position is associated with the text input attribute, the control unit 120 displays a text pointer. For example, referring to FIG. 8A, the text pointer may have an I-shape. When the hovering input position is associated with the drawing input attribute and the current input mode is the pen mode, the control unit 120 displays a pen pointer corresponding to the pen properties. For example, referring to FIG. 8B, the pen pointer may have a one or more of a shape, color, thickness and texture corresponding to the pen properties. When the hovering input position is associated with the drawing input attribute and the current input mode is an eraser mode, the control unit 120 displays an eraser pointer. For example, referring to FIG. 8C, the eraser pointer may have a shape and image reminiscent of an actual eraser.

Hence, the user may recognize availability of text input or drawing input at the hovering input position based on the displayed pointer. That is, the user may determine possibility of text input or drawing input at a specific position in advance without actual input or actual drawing tool activation by placing an input source in proximity with the mobile terminal 100 (i.e., hovering input).

### Third Exemplary Embodiment

In a third exemplary embodiment of the present invention, the control unit 120 may display different pointers according to the attribute of actions.

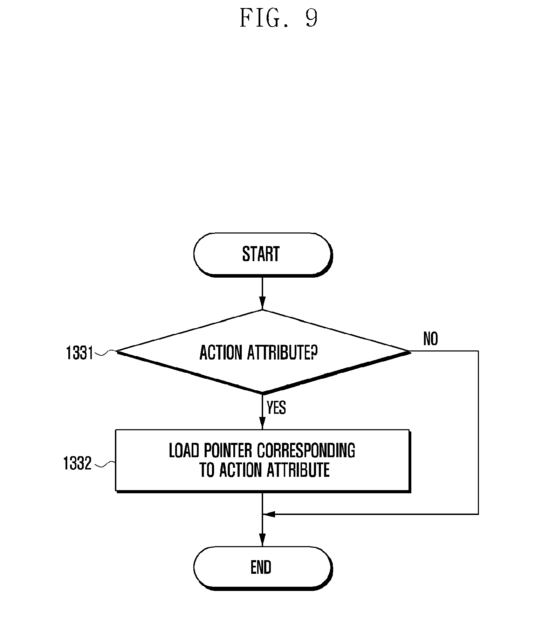

FIG. 9 is a flowchart of an attribute determination procedure according to the third exemplary embodiment of the present invention.

More specifically, referring to FIG. 9, as part of the attribute determination at operation 1300, the control unit 120 determines whether the hovering input position is associated with actions at operation 1331.

The control unit 120 may determine whether the hovering input position indicates a position for scrolling or panning. The control unit 120 may also determine the hovering input position indicates a position at which a movable object is present, indicates a position for adjustment of split screens, or indicates a position for an object size change.

Upon determination result, the control unit 120 may determine whether the hovering input position is associated with at one or more actions including scrolling, panning, object movement, split screen adjustment, and object size change, for example.

When the hovering input position is associated with actions, the control unit 120 loads a pointer corresponding to the attribute of actions at operation 1332.

The control unit 120 may check the direction of the action. That is, the control unit 120 may determine applicable directions for scrolling or panning. The control unit 120 may also determine applicable directions for an object movement, a split screen adjustment, or an object size enlargement or reduction.

For example, when a portion of content is displayed on the display unit 140 and the screen is scrollable in the up direction and the down direction, the control unit 120 may determine "up" and "down" as applicable directions. When the screen is split vertically and the spilt screens are adjustable in the left or right direction, the control unit 120 may determine "left" and "right" as applicable directions.

For a particular action, a determination of applicable directions may be performed as part of attribute determination. In this case, the control unit 120 may skip determination of applicable directions.

The control unit 120 may load a pointer corresponding to the attribute or direction of the action. The control unit 120 may load a pointer having one or more of a shape, color and image corresponding to the attribute or direction of the action.

In certain embodiments of the present invention, the pointers for actions described above differ in one or more characteristics, for example shape, thickness and image, according to one or more of attributes, action, and a direction of the actions.

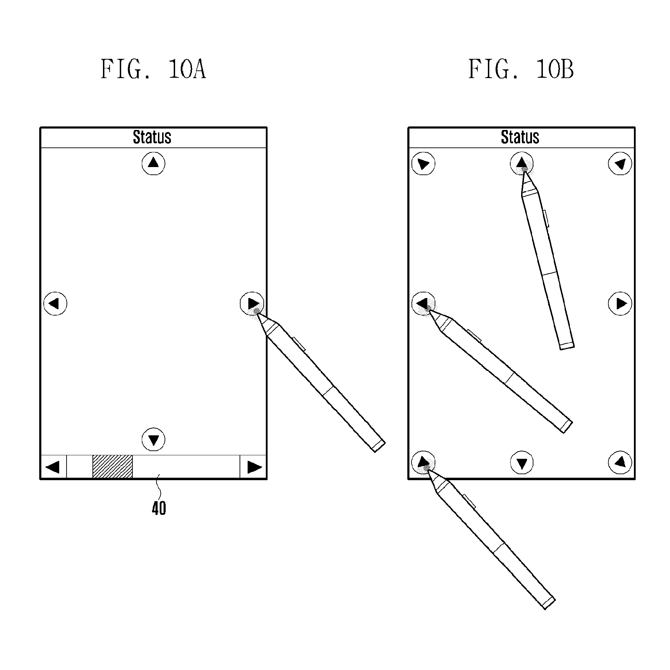

FIGS. 10A and 10B, 11, 12, and 13 illustrate example display states according to the third exemplary embodiment of the present invention.

After the attribute determination, the control unit 120 controls the display unit 140 to display a pointer corresponding to the attribute.

For example, referring to FIG. 10A, when the hovering input position indicates a position for scrolling, the control unit 120 may display a pointer composed of an image indicating scrollable directions. When a portion of content is displayed on the display unit 140 and scrolling to the right is possible, the control unit 120 may display a pointer indicating the option to scroll to the right. Here, the control unit 120 may control the display unit 140 to display a scrollbar 40 together with the pointer.

As another example, referring to FIG. 10B, when the hovering input position indicates a position for panning, the control unit 120 may display a pointer composed of an image indicating panning directions. When a touch, proximity or pressure input is sensed at the hovering input position, the control unit 120 may perform scrolling or panning in a direction according to the input position.

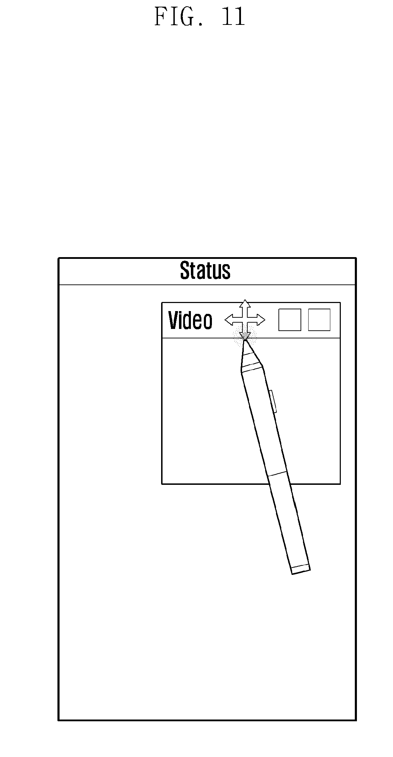

Referring to FIG. 11, when the hovering input position indicates a position at which a movable object is present, the control unit 120 may display a pointer composed of an image indicating object movability (i.e., displacement). Here, the pointer may have an image of an arrow indicating directions in which the object may be moved.

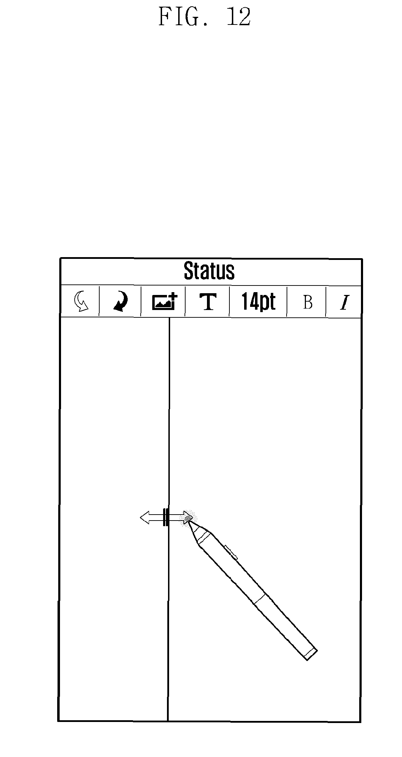

Referring to FIG. 12, when the hovering input position indicates a position for split screen adjustment, the control unit 120 may display a pointer composed of an image indicating the adjustability of split screens. Here, the pointer may have an image of an arrow indicating the adjustable directions of split screens.

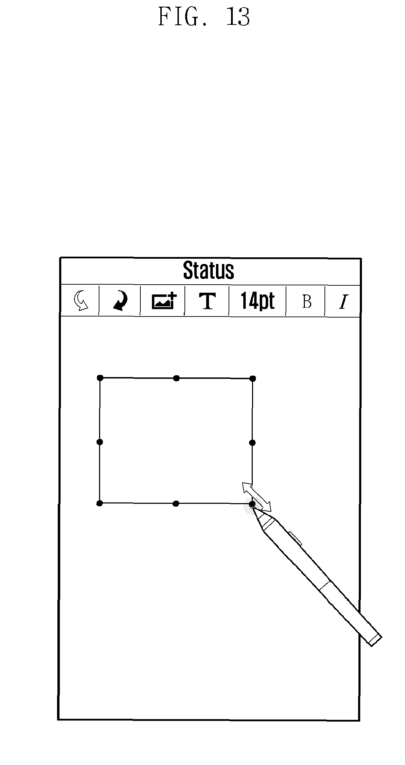

Referring to FIG. 13, when the hovering input position indicates a position for object size change, the control unit 120 may display a pointer composed of an image indicating size adjustment of an object. Here, the pointer may be an image of an arrow indicating directions of object size enlargement and reduction.

In the embodiments described above, the control unit 120 may display the pointer together with at least one effect, for example a translucence effect, a popup window effect, an animation effect, and a slide effect, for example.

Referring back to FIG. 3, the control unit 120 checks whether mode change input is detected at operation 1500.

The input unit 110 may generate different input signals according to state changes of a button on the input source having generated the hovering input.

The control unit 120 may detect a change in hovering input information through an analysis of an input signal from the input unit 110. In an embodiment, for the hovering input by a pen, the control unit 120 may detect a mode change input when the analysis of an input signal indicates that a button on the pen has been manipulated.

When mode change input is detected, the control unit 120 checks whether a user setting mode is present at operation 1600.

A mode change input may cause a change in pen properties, for example, one or more of a type, a thickness and a color of the pen having generated the hovering input. The mode change input may be caused by transition between the pen mode and the eraser mode, for example. The user setting mode may be composed of one or more modes and the sequence of transitions between the modes may be specified by the user. The control unit 120 may obtain information on user setting modes and transitions there between. The pointers may differ in type, color and image as assigned to the user setting modes.

The control unit 120 may receive information on a user setting mode from the user.

When no user setting mode information is received from the user, the control unit 120 may obtain information on a default setting mode. Information on the default setting mode may be pre-stored in the storage unit 130 by the manufacturer.

When a user setting mode is present, the control unit 120 displays a pointer corresponding to the user setting mode at operation 1710.

The control unit 120 may assign a specific shape, color and image to the pointer corresponding to the user setting mode. The shape, color and image assignable to the pointer may be determined according to user settings.

In the case that the user setting mode is composed of one or more sub-modes such that when a mode change input is detected, the control unit 120 may transition between the sub-modes and display a pointer corresponding to the current sub-mode. Here, pointers corresponding to the sub-modes may differ in one or more of a shape, thickness and image.

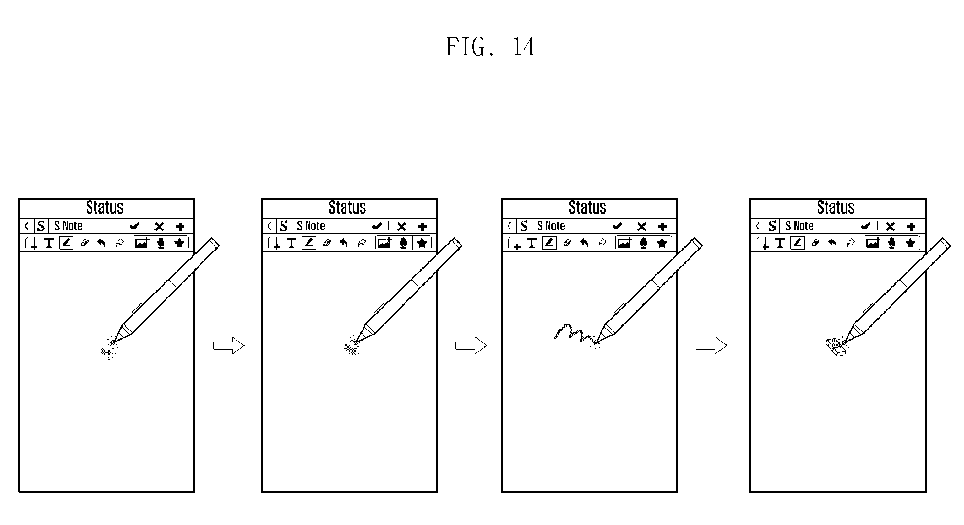

FIG. 14 illustrates example display states according to mode changes.

Referring back to operation 1600, when a user setting mode is not present, the control unit 120 displays a pointer corresponding to a default setting mode at operation 1720.

The control unit 120 determines whether hovering input is terminated at operation 1800.

When the hovering input is sustained, the input unit 110 may generate an input signal corresponding to the hovering input and send the input signal to the control unit 120 at regular intervals.

When the hovering input is terminated, the input unit 110 does not generate a corresponding input signal to be sent to the control unit 120. When an input signal with hovering information is not received for a preset time, the control unit 120 may determine that the hovering input is terminated.

When the hovering input is terminated, the control unit 120 discontinues display of the pointer at operation 1900.

Upon detection of hovering input termination, the control unit 120 may control the display unit 140 not to display the pointer.

In a feature of certain embodiments the present invention, the mobile terminal and display control method for the same detect hovering input and present current operating mode or available operating modes associated with the hovering input position, notifying the user of currently available modes in advance.

In addition, the mobile terminal and display control method for the same enable the user to identify an available mode in advance without making actual mode transition. Hence, the user may use the mobile terminal in a more efficient manner without unnecessarily transitioning between modes.

It will be appreciated that various embodiments of the present invention may be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method according to an embodiment of the present invention.

Any such software may be stored in the form of volatile or non-volatile storage, for example a storage device, whether erasable or rewritable or not, or in the form of memory, for example a Random Access Memory (RAM), a Read Only Memory (ROM), memory chips, device or integrated circuits, or on an optically or magnetically readable medium, for example a Compact Disk (CD), Digital Versatile Disc (DVD), magnetic disk or magnetic tape or the like.

It will be appreciated that the storage devices and storage media are various embodiments of non-transitory machine-readable storage that are suitable for storing a program or programs comprising instructions that, when executed, implement various embodiments of the present invention. Accordingly, various embodiments provide a program comprising code for implementing an apparatus, a system or a method as claimed in any one of the claims of this specification, and a non-transitory machine-readable storage storing such a program.

While the present invention has been shown and described with reference to various exemplary embodiments thereof, it will be understood by those skilled in the art that various changes in form and details may be made therein without departing from the scope of the present invention, as defined by the appended claims.

## Claims

1. A display control method for a mobile terminal, the method comprising:
detecting a hovering input;
identifying a position of the hovering input;
determining an attribute associated with the hovering input position; and
displaying a pointer corresponding to the determined attribute at the position of the hovering input.

2. The display control method of claim 1, wherein the determining of the attribute comprises:
checking whether the hovering input position is associated with an information display; and
loading, when the hovering input position is associated with the information display, a pointer indicating presence of information to be displayed.

3. The display control method of claim 1 or 2, wherein the determining of an attribute comprises:
checking whether the hovering input position is associated with a text input or a drawing input; and
loading, when the hovering input position is associated with the text input or the drawing input, a text pointer or drawing pointer according to the input attribute.

4. The display control method of claim 3, wherein the loading of a drawing pointer comprises:
determining, when the hovering input position is associated with the drawing input, whether the input mode is a pen mode or an eraser mode; and
determining, when the input mode is a pen mode, properties of a drawing pen including one or more of a shape, a thickness and a color; and
loading a pen pointer or eraser pointer corresponding to the pen mode or the eraser mode.

5. The display control method of any preceding claim, wherein the determining of an attribute comprises:
determining whether the hovering input position is associated with actions including scrolling, panning, object movement, split screen adjustment and object size change; and
loading, when the hovering input position is associated with one of the actions, a pointer corresponding to the associated action.

6. The display control method of any preceding claim, further comprising:
detecting a mode change input;
loading setting information regarding the mode change input from mode changes; and
displaying a pointer corresponding to a changed mode on the basis of the setting information.

7. The display control method of claim 6, wherein the mode change input is generated by a button on an input source having generated the hovering input.

8. A mobile terminal comprising:
an input unit for detecting a hovering input and generating an input signal corresponding to the hovering input;
a display unit for displaying information; and
a control unit for identifying, upon reception of an input signal from the input unit, a position of hovering input, determining an attribute associated with the hovering input position, and controlling the display unit to display a pointer corresponding to the determined attribute.

9. The mobile terminal of claim 8, wherein the input unit is configured to generate an input signal on the basis of an input source for hovering input and states of a button on the input source, and wherein the control unit is configured to identify the position of hovering input when the input source is a pen device.

10. The mobile terminal of claim 8 or 9, wherein the attribute is related to one or more of an information display, a text input, a drawing input, a scrolling operation, a panning operation, an object movement operation, a split screen adjustment operation, and an object size change operation.

11. The mobile terminal of claim 8, 9 or 10, wherein the control unit is configured to check whether the hovering input position is associated with an information display and control, when the hovering input position is associated with the information display, the display unit to display a pointer indicating the information to be displayed.

12. The mobile terminal of any of claims 8 to 11, wherein the control unit is configured to check whether the hovering input position is associated with a text input or a drawing input and control, when the hovering input position is associated with text input or drawing input, the display unit to display a text pointer or a drawing pointer according to the input attribute.

13. The mobile terminal of any of claims 8 to 12, wherein the control unit is configured to determine whether the hovering input position is associated with actions including one or more of scrolling, panning, object movement, split screen adjustment and object size change, and control, when the hovering input position is associated with one of the actions, the display unit to display a pointer corresponding to the associated action.

14. The mobile terminal of any of claims 8 to 13, wherein the input unit, upon detection of a mode change input, is configured to generate an input signal corresponding to the mode change input, and wherein the control unit is configured to load setting information regarding mode changes in response to the mode change input and control the display unit to display a pointer corresponding to a changed mode based on the setting information.

15. At least one non-transitory processor readable medium for storing a computer program of instructions configured to be readable by at least one processor for instructing the at least one processor to execute a computer process for performing the method as recited in claim 1.
